# EUROPÄISCHE PATENTSCHRIFT

(11) **EP 2 488 752 B1**
(45) Veröffentlichungstag und Bekanntmachung des Hinweises auf die Patenterteilung: **02.03.2016**
(21) Anmeldenummer: 10796320.9
(22) Anmeldetag: 09.12.2010
(51) Int. Cl.: F03G 6/06

(54) **SOLARTHERMISCHES KRAFTWERK UND VERFAHREN ZUM BETRIEB EINES SOLARTHERMISCHEN KRAFTWERKS**
SOLAR THERMAL POWER PLANT AND METHOD FOR OPERATING A SOLAR THERMAL POWER PLANT
CENTRALE HÉLIOTHERMIQUE ET PROCÉDÉ POUR FAIRE FONCTIONNER UNE CENTRALE HÉLIOTHERMIQUE

(30) Priorität: 22.12.2009 DE 102009060089
(43) Veröffentlichungstag der Anmeldung: 22.08.2012
(73) Patentinhaber: Siemens Aktiengesellschaft, 80333 München (DE)
(72) Erfinder: BIRNBAUM, Jürgen, 90419 Nürnberg (DE); GOTTFRIED, Peter, 91054 Erlangen (DE); PREITL, Zsuzsa, 91052 Erlangen (DE); THOMAS, Frank, 91056 Erlangen (DE)
(86) Internationale Anmeldenummer: PCT/EP2010/069226
(87) Internationale Veröffentlichungsnummer: WO 2011/080038

(56) Entgegenhaltungen:
- WO-A1-2008/114248
- DE-B3- 10 329 623
- US-A1- 2007 157 614
- US-A1- 2007 221 208
- US-A1- 2008 092 551
- MARKUS ECK ET AL: "Dynamics and control of parabolic trough collector loops with direct steam generation", SOLAR ENERGY, PERGAMON PRESS. OXFORD, GB, Bd. 81, Nr. 2, 1. Februar 2007 (2007-02-01), Seiten 268-279, XP002577284, ISSN: 0038-092X, DOI: 10.1016/J.SOLENER.2006.01.008 [gefunden am 2006-03-23]

## Beschreibung

Die Erfindung betrifft ein solarthermisches Kraftwerk mit einer Sonnenkollektor-Dampferzeugereinheit zur Erzeugung von Dampf, mit einer der Sonnenkollektor-Dampferzeugereinheit nachgeschalteten Sonnenkollektor-Dampfüberhitzereinheit zur Überhitzung des Dampfes und einer über ein Dampfleitungssystem mit einem Ausgang der Sonnenkollektor-Dampfüberhitzereinheit verbundenen Dampfturbine, welche im Betrieb mit dem überhitztem Dampf gespeist wird. Darüber hinaus betrifft die Erfindung ein Verfahren zum Betrieb eines solchen solarthermischen Kraftwerks.

Solarthermische Kraftwerke stellen eine Alternative zur herkömmlichen Stromerzeugung dar. Derzeit werden solarthermische Kraftwerke mit Parabolrinnenkollektoren mit einer indirekten Verdampfung mittels eines zusätzlichen Ölkreislaufs ausgeführt. Für die Zukunft werden solarthermische Kraftwerke mit direkter Verdampfung entwickelt. Ein solarthermisches Kraftwerk mit direkter Verdampfung kann beispielsweise aus einem oder mehreren Solarfeldern mit jeweils mehreren Parabolrinnenkollektoren und/oder Fresnel-Kollektoren bestehen, in denen das hineingepumpte Speisewasser zunächst vorgewärmt und verdampft wird und schließlich der Dampf überhitzt wird. Der überhitzte Dampf wird an einen konventionellen Kraftwerksteil geleitet, in dem die thermische Energie des Wasserdampfs in elektrische Energie umgewandelt wird. Vorteilhafterweise ist es dabei so, dass zunächst eine Vorwärmung und Verdampfung des Wassers in ersten Solarfeldern mit mehreren parallelen Strängen von Parabolrinnenkollektoren und/oder Fresnel-Kollektoren erfolgt (im Folgenden auch "Verdampfer-Solarfelder" genannt). Der erzeugte Dampf bzw. das erzeugte Wasser- Dampfgemisch wird danach erst in einen Dampfabscheider geleitet, um das verbliebene, noch nicht verdampfte Wasser abzuscheiden. Anschließend wird der Dampf weiter in die Sonnenkollektor-Dampfüberhitzereinheiten geleitet. Bei den Sonnenkollektor-Dampfüberhitzereinheiten kann es sich um einzelne Sonnenkollektoren, um mehrere parallele Sonnenkollektorstränge oder um wiederum aus mehreren Sonnenkollektorsträngen bestehende Solarfelder handeln.

Ein Kraftwerk mit einem derartigen solarthermischen Kraftwerksteil ist jeweils aus US-A-2007/0157614, WO-A-2008 114248, US-A-2008 0092551 und US-A-2007 0221208 bekannt.

Im Kraftwerksteil wird der aus den Sonnenkollektor-Dampfüberhitzereinheiten kommende überhitzte Dampf einer Turbine zugeführt, welche einen Generator antreibt. Beim nachfolgenden Abkühlen in einem Kondensator wandelt sich der Dampf wieder in Wasser um, welches in einem Speisewasserbehälter gesammelt und über die Speisewasserpumpe den Solarfeldern zugeführt wird. Zur effizienteren Nutzung der Energie kann der Kraftwerksteil nicht nur eine Turbine aufweisen, sondern mehrere bezüglich der Dampftransportrichtung hintereinander geschaltete Turbinen, beispielsweise eine Hochdruckturbine, in die zunächst der Frischdampf geleitet wird, und eine Mitteldruck- und/oder Niederdruckturbine, in der der von der Hochdruckturbine kommende Dampf noch einmal genutzt wird.

Dem Betrieb einer Turbine sind in der Regel enge Temperaturgrenzen gesetzt, um bei einem möglichst hohen Wirkungsgrad eine möglichst lange Lebensdauer zu erreichen. Sinkt die Dampftemperatur zu stark ab, verringert sich der Wirkungsgrad. Eine zu hohe Temperatur kann dagegen zu Beschädigungen der Turbine führen und deren Lebensdauer verkürzen. Ein typischer Temperaturbereich liegt zwischen 390 und 500°C, wobei der Dampfdruck zwischen 41 und 140 bar liegen kann. Diese Parameter können aber von Anlage zu Anlage je nach Auslegung der Komponenten variieren. Aus DE-A-103 29 623 ist bekannt, einen thermischen Speicher zum Ausgleich von Temperaturschwankungen in einem solarthermischen Kraftwerksteil zu verwenden.

Dennoch bleibt immer die Problematik, dass die Temperatur des an die Turbine gelieferten Frischdampfs möglichst stabil zu halten ist und keinen großen Schwankungen unterliegen soll. Daher ist es notwendig, eine geeignete Frischdampf-Temperaturregelung zu realisieren, welche in der Lage ist, sogar im instationären Betrieb, d. h. wenn die Leistung des Kraftwerks variiert, die Frischdampftemperatur auf einem konstanten Soll-Wert zu halten.

Eine Dampf-Temperaturregelung lässt sich mit Dampfkühleinrichtungen z. B. im Bereich der Sonnenkollektor-Dampfüberhitzereinheiten erreichen, die den zunächst über die eigentlich gewünschte Temperatur überhitzten Dampf auf die erforderliche Temperatur abkühlen. Typischerweise werden hierfür Einspritzkühler verwendet, welche genau definierte Mengen an Wasser in den Dampf einspritzen und ihn damit abkühlen. Andere Dampfkühleinrichtungen mischen kälteren Dampf hinzu. Je nach Wärmeeintrag bzw. Lastfall kann die Menge des Kühlmediums verringert oder vergrößert werden, um die gewünschte Temperatur zu halten.

Unter extremen Umständen jedoch, wie sie im instationären Betrieb solarthermischer Kraftwerke durchaus vorkommen können, kann allerdings eine konstante Frischdampftemperatur durch das eingesetzte Einspritzsystem nicht immer gewährleistet werden, da die Dampfkühleinrichtungen im Extremfall ihren Regelbereich verlassen. Z. B. kann bei einem großflächigen Wolkendurchzug über dem Solarfeld aufgrund des sich schlagartig verringernden Wärmeeintrags die Frischdampftemperatur auch durch vollständiges Schließen der Einspritzkühler nicht aufrechterhalten werden. Eine solche Situation kann auch durch die Speisewasserregelung nur schwer oder gar nicht abgefangen werden, da diese im Vergleich zu Einspritzkühlern oder anderen Dampfkühleinrichtungen ein wesentlich trägeres Zeitverhalten aufweist.

Derzeit gehen erste Planungen dahin, solarthermische Kraftwerke mit geeigneten thermischen Langzeitspeichern auszustatten. Diese Speicher sollen aufgeladen werden, indem aus dem Hauptkreislauf des Solarfeldes direkt vor der Turbine Dampf entnommen wird. Somit steht zwar weniger Dampf zum Durchströmen der Turbine zur Verfügung. Umgekehrt kann aber im Bedarfsfall die im Speicher vorhandene thermische Energie genutzt werden, um eine zusätzlichen Dampfmenge zur Verfügung zu stellen und so einen vorübergehenden Leistungsabfall, beispielsweise durch einen kurzzeitigen teilweisen oder vollständigen Ausfall der Solarfelder wegen einer Abschattung, auszugleichen. Ein schneller Temperaturausgleich ist aber bei den bisherigen Konzeptionen bisher weder möglich bzw. vorgesehen.

Es ist eine Aufgabe der vorliegenden Erfindung, ein solarthermisches Kraftwerk sowie ein Verfahren zum Betrieb eines solarthermischen Kraftwerks der eingangs genannten Art dahingehend zu verbessern, dass auch bei einer Teilleistung der Sonnenkollektor-Dampferzeugereinheit und/oder der Sonnenkollektor-Dampfüberhitzereinheit die Frischdampftemperatur für die Turbine leichter in vorgegebenen Grenzen gehalten werden kann.

Diese Aufgabe wird zum einen durch ein solarthermisches Kraftwerk gemäß Anspruch 1 und zum anderen durch ein Verfahren gemäß Patentanspruch 14 gelöst.

Ein solarthermisches Kraftwerk, wie es eingangs beschrieben wird, weist hierzu erfindungsgemäß einen Zwischenspeicher auf, welcher zumindest an einer zwischen der Sonnenkollektor-Dampfüberhitzereinheit und der Dampfturbine angeordneten ersten Hochtemperatur-Speicheranschlussstelle mit dem Dampfleitungssystem verbunden ist. Dieser Anschluss kann über eine Speicheranschlussventileinrichtung mit einem oder mehreren Ventilen erfolgen. Zudem wird eine im Dampfleitungssystem zwischen der Hochtemperatur-Speicheranschlussstelle und der Dampfturbine angeordnete Dampfkühleinrichtung benötigt (im Folgenden auch als "End-Dampfkühleinrichtung" bezeichnet). Optional kann sich zwischen der ersten Hochtemperatur-Speicheranschlussstelle und der Dampfturbine eine zweite Hochtemperatur-Speicheranschlussstelle befinden. Schließlich benötigt das solarthermische Kraftwerk eine Steuereinrichtung, welche so ausgebildet ist, dass sie im Betrieb die Temperatur des überhitzten Dampfes auf eine Turbinen-Frischdampftemperatur regelt, indem der Dampf zunächst in der Sonnenkollektor-Dampfüberhitzereinheit auf eine oberhalb der Turbinen-Frischdampftemperatur liegende Dampfüberhitzer-Endtemperatur überhitzt wird und dann mittels der End-Dampfkühleinrichtung auf die Turbinen-Frischdampftemperatur abgekühlt wird und dass in einem Speicherbetriebsmodus ein Teil des überhitzten Dampfes an der ersten Hochtemperatur-Speicheranschlussstelle in den Zwischenspeicher geleitet wird und in einem Entnahmebetriebsmodus überhitzter Dampf aus dem Zwischenspeicher dem Dampfleitungssystem an der ersten Hochtemperatur-Speicheranschlussstelle und/oder der zweiten Hochtemperatur-Speicheranschlussstelle zugeführt wird.

Der Speicherbetriebsmodus wird sinnvollerweise dann eingestellt, wenn sich das solarthermische Kraftwerk in einem Überleistungsbetrieb befindet, in dem das Solarkollektorfeld mehr Dampfleistung liefert als gebraucht wird. Der Entnahmebetriebsmodus wird dann eingestellt, wenn sich das solarthermische Kraftwerk in einem Unterleistungsbetrieb befindet, d. h. wenn das Solarkollektorfeld weniger Dampfleistung liefert als eigentlich gebraucht wird. Es ist klar, dass bei einer solchen Anlage die Kapazität des Solarfeldes, d. h. der Sonnenkollektor-Dampferzeugereinheit(en) und der Sonnenkollektor-Dampfüberhitzereinheit(en), größer dimensioniert sein muss als sie im normalen Durchschnittsbetrieb benötigt wird, um so ausreichend Kapazität zum Auffüllen des Zwischenspeichers während des Speicherbetriebsmodus zur Verfügung zu stellen.

Bei dem erfindungsgemäßen Betriebsverfahren wird also die Temperatur des überhitzten Dampfes beispielsweise unter Messung einer aktuellen Ist-Temperatur auf eine vorgegebene Turbinen-Frischdampftemperatur (als Soll-Temperatur) geregelt, indem der Dampf zunächst auf eine oberhalb der Turbinen-Frischdampftemperatur liegende Dampfüberhitzer-Endtemperatur überhitzt und dann erst in einer hinter der Sonnenkollektor-Dampfüberhitzereinheit angeordneten Dampfkühleinrichtung geregelt auf die Turbinen-Frischdampftemperatur abgekühlt wird. Im Speicherbetriebsmodus wird ein Teil des überhitzten Dampfes vor der Dampfkühleinrichtung in einen Zwischenspeicher geleitet, und in einem Entnahmebetriebsmodus wird überhitzter Dampf vor und/oder hinter der Dampfkühleinrichtung aus dem Zwischenspeicher entnommen, d. h. wieder dem Dampfleitungssystem vor der Turbine zugeführt.

Ein wesentlicher Kernpunkt der Erfindung besteht somit darin, dass zunächst die Überhitzung des Dampfes auf die Dampfüberhitzer-Endtemperatur oberhalb der gewünschten Turbinen-Frischdampftemperatur erfolgt und dass der Zwischenspeicher so an das Dampfleitungssystem angeschlossen ist, dass Dampf mit dieser Dampfüberhitzer-Endtemperatur (und nicht mit der von der Turbine benötigten Frischdampftemperatur) dem Speicher zugeführt wird. Das heißt, der zur Aufladung des Speichers benötigte Dampf wird dem Hauptdampfkreislauf an der Stelle mit der höchsten Dampftemperatur entnommen. Somit besteht die Möglichkeit, im Entnahmemodus aus dem Zwischenspeicher auch Dampf zurückzuführen, welcher eine höhere Temperatur aufweist als die Frischdampftemperatur, so dass - anders als bei bisherigen Konzepten - der Speicher nicht nur dazu verwendet werden kann, um zusätzlichen Dampf zur Verfügung zu stellen, sondern auch, um einem Temperaturabfall des von der Sonnenkollektor-Dampfüberhitzereinheit kommenden Dampfes entgegenzuwirken, d. h. diesem Temperaturabfall durch Einbringen eines heißeren Dampfes zu kompensieren. Durch die zusätzliche Beimischung von Dampf höherer Temperatur in der erfindungsgemäßen Weise kann somit auch bei vollständig deaktivierter End-Dampfkühleinrichtung, d. h. bei geschlossener Einspritzarmatur, die Frischdampftemperatur in bestimmten Grenzen weiterhin konstant gehalten werden, auch wenn der von der Sonnenkollektor-Dampfüberhitzereinheit gelieferte Dampf unterhalb der Frischdampftemperatur liegt. Somit wird die Verfügbarkeit und Betriebsflexibilität des gesamten solarthermischen Kraftwerks erhöht.

Ein weiterer Vorteil der Anordnung besteht darin, dass bei einer kurzfristigen Anforderung von Leistungsreserven (sog. "Sekundenreserve") im Langzeitspeicher gespeicherte thermische Energie zu einer zusätzlichen Dampfproduktion verwendet werden kann, auch wenn kein Temperaturabfall des von der Sonnenkollektor-Dampfüberhitzereinheit kommenden Dampfes vorliegt, sondern lediglich zur Leistungserhöhung die Dampfmenge erhöht werden soll. Der zusätzlich erzeugte Dampf kann dann wieder in das Dampfleitungssystem vor der End-Dampfkühleinrichtung dem Hauptdampfstrom beigemischt werden und in der Kühleinrichtung auf die Frischdampftemperatur gebracht werden. Durch die vorteilhafte Kopplung des Zwischenspeichers an das Dampfleitungssystem vor der End-Dampfkühleinrichtung kann folglich auch auf einfache Weise eine konstante Frischdampftemperatur während der Bereitstellung von Sekundenreserve gewährleistet werden.

Zusätzlich könnte der Zwischenspeicher in sonnenschwachen Zeiten, insbesondere am Abend und in der Nacht, genutzt werden, um weiterhin Dampf zu erzeugen und mit dem solarthermischen Kraftwerk auch in diesen Zeiten Strom zu produzieren. Dadurch, dass das Endtemperaturniveau des Austrittsdampfes aus dem Zwischenspeicher über der geforderten Frischdampftemperatur liegt, kann durch die Dampfkühleinrichtung die Frischdampftemperatur auch in diesem Betriebsmodus länger aufrecht erhalten werden. Eine über die Dampfkühleinrichtung geführte und von der Turbine akzeptierte Temperaturabsenkung des Frischdampfes wäre mit dieser Anordnung ebenfalls möglich, z. B. wenn der Zwischenspeicher im Nachtbetrieb geleert werden soll.

Bei der einfachsten und besonders bevorzugten Variante erfolgt die Zuführung des Dampfes aus dem Zwischenspeicher in das Dampfleitungssystem während des Entnahmebetriebsmodus vorzugsweise an der ersten Hochtemperatur-Speicheranschlussstelle selbst, d. h. an der gleichen Anschlussstelle, an der auch der Dampf im Speicherbetriebsmodus dem Speicher zugeführt wird. Dadurch kann die ohnehin innerhalb des Dampfleitungssystems angeordnete End-Dampfkühleinrichtung genutzt werden, um auch den aus dem Zwischenspeicher kommenden überhitzten Dampf während des Entnahmebetriebsmodus mit auf die passende Frischdampftemperatur abzukühlen.

Bei einem anderen Ausführungsbeispiel wird der überhitzte Dampf dem Dampfleitungssystem aus dem Zwischenspeicher an der zweiten Hochtemperatur-Speicheranschlussstelle zugeführt. In diesem Fall sollte in der Zuleitung vom Zwischenspeicher zur zweiten Hochtemperatur-Speicheranschlussstelle des Dampfleitungssystems bevorzugt ebenfalls eine Dampfkühleinrichtung angeordnet sein, um so separat den aus dem Zwischenspeicher kommenden überhitzten Dampf, der ja eine Temperatur oberhalb der Frischdampftemperatur aufweisen sollte, auf die Frischdampftemperatur abzukühlen. Zwar sind mit einer solchen weiteren Zuleitung zur zweiten Hochtemperatur-Speicheranschlussstelle und einer zweiten Dampfkühleinrichtung zusätzliche Kosten verbunden, jedoch kann hier die Temperatur des Dampfes aus dem Zwischenspeicher separat und unabhängig von dem durch die End-Dampfkühleinrichtung strömenden Hauptdampfstrom geregelt werden, so dass auch diese Variante je nach den konstruktiven weiteren Vorgaben der Anlage sinnvoll sein kann.

Die abhängigen Ansprüche sowie die nachfolgende Beschreibung enthalten besonders vorteilhafterweise Ausgestaltungen und Weiterbildungen der Erfindung, wobei explizit darauf hingewiesen wird, dass das erfindungsgemäße Verfahren auch entsprechend den abhängigen Ansprüchen zum solarthermischen Kraftwerk weitergebildet sein kann und umgekehrt.

Im Speicherbetriebsmodus wird der Zwischenspeicher vorzugsweise durch Öffnung eines Ventils mit dem Dampfleitungssystem zwischen der Sonnenkollektor-Dampfüberhitzereinheit und der Dampfturbine verbunden, wobei bei einer bevorzugten Variante die Öffnung des Ventils in Abhängigkeit von einem vorgegebenen Massenstrom-Sollwert in dem Dampfleitungssystem vor der Dampfturbine geregelt wird. Bei einer anderen bevorzugten Variante wird die Öffnung des Ventils auf einen konstanten Druck vor der Dampfturbine geregelt.

Im Entnahmebetriebsmodus wird der Zwischenspeicher ebenfalls durch Öffnung eines Ventils mit dem Dampfleitungssystem zwischen der Sonnenkollektor-Dampfüberhitzereinheit und der Dampfturbine verbunden, wobei vorzugsweise hier jedoch die Öffnung des Ventils auf eine konstante Temperatur im Dampfleitungssystem an der Hochtemperatur-Speicheranschlussstelle geregelt wird. Erfolgt die Einspeisung des Dampfes aus dem Zwischenspeicher an der ersten Hochtemperatur-Speicheranschlussstelle, an der der Dampf auch aus dem Dampfleitungssystem in den Speicher geführt wird, so kann auf diese Weise dafür gesorgt werden, dass vor der letzten Dampfkühleinrichtung die Temperatur bereits auf einem möglichst konstanten Wert gehalten wird, so dass im Rahmen der Temperaturregelung mit Hilfe der End-Dampfkühleinrichtung keine großen Regelungsschwankungen auftreten.

Als Zwischenspeicher könnte im Prinzip ein einfacher Dampfspeicher dienen, in den der überhitzte Dampf einfach eingeleitet und dem er wieder entnommen wird. Bei einem solchen Dampfspeicher kann es sich z. B. um einen sog. Ruths-Speicher mit einem isolierten Druckkessel handeln.

Vorzugsweise umfasst der Zwischenspeicher aber einen Wärmespeicher, in dem dem im Speicherbetriebsmodus eingeleiteten Dampf thermische Energie entzogen wird, welche dann im Wärmespeicher gespeichert wird. Umgekehrt wird in einem Entnahmebetriebsmodus die gespeicherte thermische Energie wieder an den Dampf abgegeben, bevor er dem Dampfleitungssystem zugeführt wird.

Der Wärmespeicher kann dabei so aufgebaut sein, dass die thermische Energie durch einen Phasenübergang eines Speichermediums gespeichert oder wieder abgegeben wird, d. h. es kann sich um einen sogenannten PCM-Speicher handeln (PCM = Phase Change Material; Phasenwechselmaterial). Das Wärme speichernde Medium eines PCM-Speichers kann z.B. aus Salzen oder bereits geschmolzenen Salzen bestehen. Eine Phasenänderung der Salze zwischen einem festen und einem flüssigen Zustand bzw. der geschmolzenen Salze zwischen einem flüssigen und einem gasförmigen Zustand wird dabei genutzt, um thermische Energie zu speichern. Umgekehrt wird bei einem Phasenübergang von gasförmig nach flüssig oder flüssig nach fest thermische Energie wieder freigesetzt. Der Wärmetransport zwischen dem Dampf und dem Speichermedium kann beispielsweise innerhalb eines Wärmetauschers, vorzugsweise in einem Röhrenregister, erfolgen.

Alternativ oder zusätzlich kann der Zwischenspeicher auch zumindest einen Wärmespeicher umfassen, in dem die thermische Energie von einem Speichermedium ohne Phasenübergang gespeichert oder wieder abgegeben wird. Als Speichermedium kann hier beispielsweise Hochtemperaturbeton genutzt werden. Auch bei diesen Speichertypen kann der Wärmetransport in einem Wärmetauscher, vorzugsweise innerhalb eines Röhrenregisters, durchgeführt werden. Derzeit gibt es bereits Hochtemperaturbeton-Materialien, die im Bereich von bis zu 400°C arbeiten. Andere Materialien, die im Bereich bis zu 500°C arbeiten, sind in der Entwicklung.

Bei einem besonders bevorzugten Ausführungsbeispiel umfasst der Zwischenspeicher gleich mehrere Speicherstufen zur Aufnahme und Abgabe von thermischer Energie. Dabei sind besonders bevorzugt zumindest zwei der Speicherstufen funktionell unterschiedlich aufgebaut. D. h. es ist beispielsweise eine Speicherstufe als PCM-Speicher aufgebaut und eine andere Speicherstufe mit einem Wärmespeicher, in dem die thermische Energie ohne Phasenübergang gespeichert wird.

Bei einer Variante eines Zwischenspeichers mit mehreren Speicherstufen wird in einer der Speicherstufen der Dampf im Speicherbetriebsmodus verflüssigt und im Entnahmebetriebsmodus wird je nach Anlagenbetriebszustand, z.B. bei reduzierter Last mit geringerem Druck, in dieser Speicherstufe das Wasser auch wieder verdampft. Insbesondere bei einem solchen Aufbau sind die Speicherstufen vorzugsweise funktionell parallel zur Sonnenkollektor-Dampferzeugereinheit mit der nachgeschalteten Sonnenkollektor-Dampfüberhitzereinheit aufgebaut. Das heißt, dass beispielsweise der Zwischenspeicher parallel zu den Solarfeldern wie in einer Art Bypass zwischen der Speisewasserzuleitung und dem Dampfleitungssystem vor der Turbine angeordnet ist und in ähnlicher Weise abgestuft ist wie die einzelnen Stufen in den Solarfeldern. Dabei ist parallel zu den Sonnenkollektor-Dampferzeugereinheiten eine Speicherstufe angeordnet, bei der im Speicherbetriebsmodus Dampf verflüssigt wird und im Entnahmebetriebsmodus Wasser verdampft wird und parallel zu den Sonnenkollektor-Dampfüberhitzereinheiten sind dann die Speicherstufen angeordnet, welche im Speicherbetriebsmodus den überhitzten Dampf abkühlen bzw. im Entnahmebetriebsmodus den Dampf wieder überhitzen.

Je nach Aufbau des Zwischenspeichers bzw. der verwendeten Speicherstufen ist der Zwischenspeicher an zumindest einer Niedertemperatur-Speicheranschlussstelle mit unterschiedlichen Leitungen bzw. anderen Komponenten im Leitungssystem des solarthermischen Kraftwerks verbunden. Auch auf der Niedertemperaturseite erfolgt der Anschluss wie an der Hochtemperaturseite sinnvollerweise über eine Speicheranschlussventileinrichtung mit einem oder mehreren Ventilen.

Wird beispielsweise in einer der Speicherstufen der Dampf im Speicherbetriebsmodus verflüssigt, so kann der Zwischenspeicher an der Niedertemperatur-Speicheranschlussstelle vorzugsweise mit einer Speisewasserleitung verbunden sein, über welche das im Zwischenspeicher entstehende Wasser als Speisewasser an die Sonnenkollektor-Dampferzeugereinheit geleitet wird. Besonders bevorzugt ist dabei der Zwischenspeicher an der Niedertemperatur-Speicheranschlussstelle über eine Pumpe mit der Speisewasserleitung verbunden.

Bei diesem Aufbau kann im Speicherbetriebsmodus also an der Hochtemperatur-Speicheranschlussstelle ständig neuer überhitzter Dampf in den Zwischenspeicher geleitet werden. In den Speicherstufen wird der Dampf dann abgekühlt und letztlich in einer Speicherstufe wieder zu Wasser verflüssigt, welches dann über die Pumpe der Speisewasserleitung und somit z. B. den Solarfeldern zugeführt wird. Die thermische Energie wird dabei in den einzelnen Speicherstufen abgespeichert. Im Entnahmebetriebsmodus kann dann umgekehrt Speisewasser auch aus der Speisewasserleitung abgezogen werden, das dann in einer der Speicherstufen zunächst verdampft wird und in den weiteren Speicherstufen unter Abgabe der gespeicherten thermischen Energie überhitzt wird, so dass dann der überhitzte Dampf wieder an der Hochtemperatur-Speicheranschlussstelle dem Dampfleitungssystem zugeführt werden kann.

Da die einzelnen Speicherstufen nicht zwingend über die gesamte Dauer des Speicherbetriebsmodus in der Lage sind, mit einer konstanten Rate neue thermische Energie aufzunehmen, kann es sein, dass sich am Ende der Speicherstufen an der Niedertemperatur-Speicheranschlussstelle je nach Dauer des Speicherbetriebsmodus, d. h. nach bereits erfolgter Energieaufnahme des Zwischenspeichers, die Temperatur- und Druckbedingungen ändern und entsprechend den aktuellen Bedingungen dort Wasser, Dampf oder ein Wasser/Dampf-Gemisch ansteht. Besonders bevorzugt ist daher der Zwischenspeicher an einer Niedertemperatur-Speicheranschlussstelle (direkt oder indirekt, d. h. gegebenenfalls über weitere Komponenten) mit einem Kondensator und/oder einer Entspannungseinrichtung des solarthermischen Kraftwerks verbunden. Bei der Entspannungseinrichtung kann es sich beispielsweise um einen Entspannungsbehälter oder Ähnliches handeln, in welchem der unter Druck stehende Dampf oder das Wasser/Dampf-Gemisch z. B. atmosphärisch entspannt wird. Dabei kann im Sinne der Erfindung auch ein Speisewasserbehälter bei geeigneter Auslegung als Entspannungseinrichtung für die Ableitung des Mediums am niedertemperaturseitigen Ende des Zwischenspeichers dienen. Insbesondere kann auch zwischen dem niedertemperaturseitigen Ausgang des Zwischenspeichers und dem Kondensator vorzugsweise ein Entspannungsbehälter vorgeschaltet sein. Dies ist insbesondere dann sinnvoll, wenn vom Hersteller des Kondensatorsystems vorgegeben ist, dass aus einer solchen Nebenleitung nur flüssiges Medium in den Kondensator eintreten sollte. Die Zuleitung in einen Kondensator bzw. zu einer Entspannungseinrichtung hat den Vorteil, dass unabhängig von den Temperatur- und Druckverhältnissen und vom Aggregatzustand des Mediums am Ausgang des Zwischenspeichers das Medium weggeführt werden kann. Damit ist eine volle (thermische) Aufladung auch der niedertemperaturseitig letzten Speicherstufe möglich. D. h. der Zwischenspeicher kann insgesamt auf ein höheres Temperaturniveau gebracht werden als bei einer Konstruktion, bei der nur ein Speicherbetrieb möglich ist, solange die Aufnahmekapazität der letzen Speicherstufe ausreicht, um den Dampf vollständig in die flüssige Phase umzuwandeln. Umgekehrt kann dann im Entnahmebetriebsmodus eine größere Energiemenge bzw. Wärmeenergie bei vergleichsweise höherem Temperaturniveau aus dem Zwischenspeicher wieder entnommen werden und so auch im Volllastbetrieb des Solarfeldes die Frischdampftemperatur besser gestützt werden.

Vorzugsweise kann der Zwischenspeicher auch an verschiedenen Niedertemperatur-Speicheranschlussstellen mit verschiedenen Dampfleitungen verbunden sein, in denen im Betrieb Dampf bei unterschiedlichen Temperaturen oder Drücken geführt wird. Die Verbindung mit den verschiedenen Dampfleitungen an den verschiedenen Niedertemperatur-Speicheranschlussstellen erfolgt vorteilhafterweise über geeignete Ventile, die einzeln ansteuerbar sind. Dabei ist bevorzugt zumindest ein Teil der Niedertemperatur-Speicheranschlussstellen in Ausgangs-Dampfleitungen einer Dampfturbine angeordnet und/oder zumindest ein Teil der Niedertemperatur-Speicheranschlussstellen mit Wärmetauschern verbunden. Die Verbindung des Zwischenspeichers mit verschiedenen Niedertemperatur-Speicheranschlussstellen an einem Kondensator bzw. einer Entspannungseinrichtung und/oder an verschiedenen Dampfleitungen kann auch an Zwischenspeichern eingesetzt werden, welche keine Speicherstufen aufweisen, in denen der Dampf kondensiert wird. Gibt es Verbindungen zu verschiedenen Dampfleitungen, in denen Dampf mit unterschiedlichen Temperaturen und Drücken geführt wird, dann kann beispielsweise immer das Ventil zu der Dampfleitung geöffnet werden, in dem Dampf mit dem passenden Dampftemperaturbereich und in dem passenden Druckbereich geführt wird.

Die Erfindung wird im Folgenden anhand von Ausführungsbeispielen unter Hinweis auf die beigefügte Zeichnung näher erläutert.

Die einzige Figur zeigt ein schematisches Blockdiagramm eines solarthermischen Kraftwerks gemäß einem bevorzugten Ausführungsbeispiel der Erfindung.

Die Figur zeigt dabei stark vereinfacht ein solarthermisches Kraftwerk mit direkter Verdampfung. Dieses weist eine aus mehreren Sonnenkollektorsträngen gebildete Sonnenkollektor-Dampferzeugereinheit 2 zur Verdampfung von Speisewasser auf, das über eine Speisewasserleitung zugeführt wird. Der Sonnenkollektor-Dampferzeugereinheit 2 ist eine ebenfalls aus mehreren Sonnenkollektorsträngen gebildete Sonnenkollektor-Dampfüberhitzereinheit 4 nachgeschaltet, um den von der Sonnenkollektor-Dampferzeugereinheit 2 erzeugten Dampf zu überhitzen. Zwischen der Sonnenkollektor-Dampferzeugereinheit 2 und der Sonnenkollektor-Dampfüberhitzereinheit 4 befindet sich ein Dampfabscheider 3, in dem noch im Dampf vorhandenes Restwasser abgeschieden wird und über eine Rückführleitung 11 mit einer Pumpe 9 der Speisewasserleitung 10 wieder zugeführt wird. Der aus der Sonnenkollektor-Dampfüberhitzereinheit 4 kommende Dampf wird über ein Dampfleitungssystem 13 einer Hochdruck-Turbine 40 zugeführt. Vor dem Turbineneingang 41 befindet sich ein Absperrventil bzw. Turbinenregelventil 18. Über eine Abtriebswelle 45 ist die Turbine 40 mit einem Getriebe 46 verbunden, welches wiederum mit einem Generator 62 verbunden ist, um die kinetische Energie der Antriebswelle in elektrische Energie umzuwandeln.

Der in der Hochdruck-Turbine 40 genutzte Dampf wird dann stufenweise an verschiedenen Ausgängen der Hochdruck-Turbine 40 in Ausgangs-Dampfleitungen 42, 43, 44 geleitet, die zu Wärmetauschern 47 führen, mit denen das Speisewasser für die Sonnenkollektor-Dampferzeugereinheit 2 vorgewärmt werden kann. Außerdem wird ein Teil des Dampfes aus der Ausgangs-Dampfleitung 44 einem Turbineneingang 56 einer Niederdruck-Turbine 50 zugeleitet, um den Dampf noch weiter zur Umwandlung in elektrische Energie zu nutzen. Eine Abtriebswelle 53 dieser Niederdruck-Turbine 50 ist hierzu ebenfalls mit dem Generator 62 verbunden. In der Dampfleitung zum Turbineneingang 56 befindet sich zum einen ein Abscheider 52, um kondensiertes Wasser abzuscheiden, sowie ein Wärmetauscher 51, in dem der Dampf noch einmal aufgeheizt (zwischenüberhitzt) wird, bevor er der Niederdruck-Turbine 50 zugeleitet wird. Über ein Ventil 54 vor dem Turbineneingang 56 kann der Druck am Eintritt der Niederdruck-Turbine 50 reguliert werden. Um dem Dampf für die Niederdruck-Turbine 50 im Wärmetauscher 51 weitere thermische Energie zuzuführen, wird dieser von Dampf durchströmt, der über ein Abzweigventil 48 in einer Abzweigleitung 49 von dem an sich für die Hochdruck-Turbine 40 vorgesehenen überhitzten Dampf abgezweigt wird. Der aus der Abzweigleitung 49 kommende Dampf kondensiert dabei im Wärmetauscher 51 und wird über eine Leitung 55 über die Wärmetauscher 47 einem Speisewasserbehälter 63 zugeführt.

Die Niederdruck-Turbine 50 weist ebenfalls an verschiedenen Turbinenstufen mehrere Ausgänge auf, die mit Ausgangs-Dampfleitungen 57, 58, 59, 60, 61 verbunden sind. Eine Ausgangs-Dampfleitung 57 führt in den Speisewasserbehälter 63.

Eine weitere Ausgangs-Dampfleitung 61, welche sich ganz am Ende der Niederdruck-Turbine 50 befindet, d. h. die Leitung mit dem niedrigsten Dampfdruck, führt zu einem Kondensator 65, welcher über einen weiteren Wärmetauscher 67 mit einem Kühlturm 68 verbunden ist. In diesem Kondensator 65 kondensiert der Restdampf zu Wasser, welches über eine Pumpe 69 dem Speisewasserbehälter 63 zugeführt wird. Auf dem Weg dorthin kann es mehrere Wärmetauscher 70 passieren, die über die Ausgangs-Dampfleitungen 58, 59, 60 von der Niederdruck-Turbine 50 mit Restdampf versorgt werden. In diesen Wärmetauschern 70 kondensiert der Restdampf ebenfalls zu Wasser, welches an der Mischstelle 66 mit dem im Kondensator 65 kondensierten Wasser gemischt und mit diesem über die Pumpe 69 wiederum durch die Wärmetauscher 70 dem Speisewasserbehälter 63 zugeführt wird. Dadurch wird das Wasser effektiv kondensiert und auf hoher Temperatur (unter der Dampftemperatur) gehalten, ohne die thermische Energie im Restdampf zu verschenken.

Dem Speisewasserbehälter 63 wird außerdem auch das in den anderen Wärmetauschern 51, 47 kondensierte Wasser zugeführt. Das Speisewasser wird über eine Speisewasserleitung 10 mittels einer Speisewasserpumpe 64 dann wieder der Sonnenkollektor-Dampferzeugereinheit 2 zugeführt, um so den Kreislauf zu schließen.

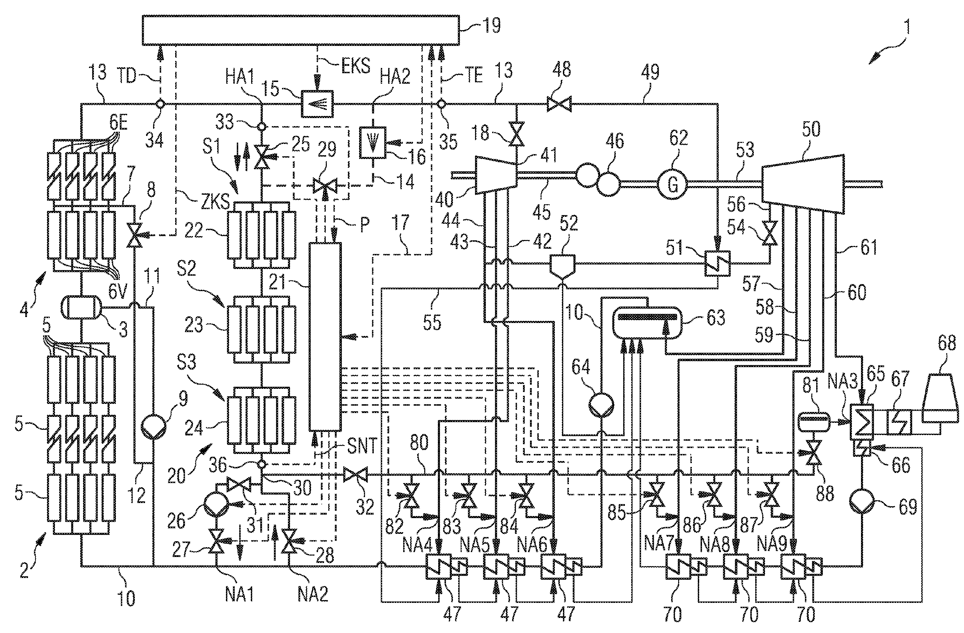

Die Sonnenkollektor-Dampferzeugereinheit 2 besteht hier, wie bereits erwähnt, aus mehreren Strängen von einzelnen Sonnenkollektoren 5. Hierbei kann es sich z. B. um Parabolrinnenkollektoren oder Fresnel-Kollektoren handeln. Dargestellt sind hier nur vier Stränge mit jeweils drei Kollektoren 5. In der Realität wird ein solches solarthermisches Kraftwerk eine Vielzahl von weiteren Sonnekollektorsträngen mit einer erheblich höheren Anzahl an Sonnenkollektoren aufweisen. Ggf. sind dabei auch mehrere Kollektorstränge gruppenweise zu räumlich getrennten Solarfeldern gebündelt und der darin erzeugte Dampf wird hinter den Solarfeldern vor Eintritt in die Sonnenkollektor-Dampfüberhitzereinheiten gemischt. Dabei können den einzelnen Solarfeldern zur Dampferzeugung jeweils eigene Solarfelder zur Überhitzung des Dampfes zugeordnet sein. D. h. es sind dann mehrere Gruppen von Sonnenkollektor-Dampferzeugereinheiten 2 mit jeweils nachgeschalteten Sonnenkollektor-Dampfüberhitzereinheiten 4, wie dies für eine solche Gruppe in Figur 1 dargestellt ist, parallel geschaltet und werden über eine oder mehrere Speisewasserleitungen 10 gespeist und der überhitzte Dampf wird endseitig im Dampfleitungssystem 13 vor der Hochdruck-Turbine 40 in einer Mischzone gemischt.

Auch die Sonnenkollektor-Dampfüberhitzereinheit 4 besteht aus mehreren Sonnenkollektorsträngen mit jeweils mehreren Sonnenkollektoren 6V, 6E. Bei den Sonnenkollektoren 6V handelt es sich um Vorüberhitzer-Sonnenkollektoren 6V (im Folgenden kurz "Vorüberhitzer" genannt) und bei den Sonnenkollektoren 6E um Endüberhitzer-Sonnenkollektoren 6E (im folgenden kurz "Endüberhitzer" genannt).

Zwischen den Vorüberhitzern 6V und den Endüberhitzern 6E befinden sich Einspritzkühler, welche hier durch eine Einspritzstelle 7 schematisch dargestellt sind. An dieser Stelle 7 wird zur Kühlung Wasser eingespritzt, um so die Ausgangstemperatur TD am Ende der Endüberhitzer 6E, d. h. die Dampfüberhitzer-Endtemperatur TD, auf einen vorgegebenen Wert zu regeln.

Hierzu dient eine Steuereinrichtung 19, welche u. a. die an einer Temperatur-Messstelle 34 hinter dem Endüberhitzer 6E gemessene Dampfüberhitzer-Endtemperatur TD als aktuelle Ist-Temperatur erhält und auf eine vorgegebene Soll-Temperatur regelt, indem sie ein Zwischeneinspritzungs-Kontrollsignal ZKS an ein Regelungsventil 8 ausgibt, welches die Wasserzufuhr zu den Einspritzkühlern an der Einspritzstelle 7 regelt. Die Regelung kann dabei prinzipiell für jeden Kollektorstrang separat erfolgen, wenn die Einspritzkühler der Kollektorstränge jeweils über separat ansteuerbare Ventile versorgt werden. Das Kühlwasser kann beispielsweise über eine Kühlwasserleitung 12 hinter der Pumpe 9 zur Rückführung des Kondenswassers aus dem Wasserabscheider 3 entnommen werden. Die Steuereinrichtung 19 kann hierfür eine oder mehrere Regelungsanordnungen (nicht dargestellt) aufweisen, welche entweder diskret in Form von einzelnen elektronischen Bauteilen oder auch integriert in einem Rechner in Form von Software realisiert sein kann.

Diese Steuereinrichtung 19 kann noch weitere Messdaten aus dem gesamten Leitungssystem erhalten, beispielsweise den aktuellen Druck in der Sonnenkollektor-Dampferzeugereinheit, in der Sonnenkollektor-Dampfüberhitzereinheit oder im Dampfleitungssystem vor der Turbine 40. Die Soll-Temperatur, auf die die Dampfüberhitzer-Endtemperatur TD geregelt wird, sollte immer höher als die an sich benötigte Frischdampftemperatur für die Dampfturbine 40 sein. Um dann die Dampftemperatur auf die benötigte Frischdampftemperatur zu bringen, befindet sich im Dampfleitungssystem 13 zwischen dem Ausgang der Sonnenkollektor-Dampfüberhitzereinheit 4 und dem Eingang 41 der Dampfturbine 40 eine End-Dampfkühleinrichtung 15, hier ein weiterer Einspritzkühler 15. Dieser wird ebenfalls von der Steuereinheit 19 über ein Endabspritzungs-Kontrollsignal EKS angesteuert, was beispielsweise wieder über eine Ansteuerung eines Ventils erfolgen kann, über welches der Einspritzkühler 15 mit Kühlwasser versorgt wird (nicht dargestellt). Im Folgenden wird die End-Dampfkühleinrichtung 15 auch kurz als "Endeinspritzer" bezeichnet, ohne die Erfindung darauf zu beschränken, dass es sich hierbei zwingend um eine Dampfkühleinrichtung in Form eines Einspritzkühlers handeln muss.

Zur Regelung der Temperatur wird an einer Temperaturmessstelle 35 hinter dem Endeinspritzer 15 eine weitere Ist-Temperatur, hier konkret die aktuelle Frischdampftemperatur TE, gemessen und mit einem Soll-Temperaturwert, d.h. hier mit dem Sollwert der für die Turbine 40 geforderten Frischdampftemperatur, welchen die Steuereinrichtung 19 beispielsweise von der Blocksteuerung der Turbinen vorgegeben bekommt verglichen. Dementsprechend wird dann der Endeinspritzer 15 angesteuert.

Erfindungsgemäß befindet sich außerdem in dem Dampfleitungssystem 13 vor dem Endeinspritzer 15 eine Hochtemperatur-Speicheranschlussstelle HA1, an welcher ein Zwischenspeicher 20 über ein regelbares Ventil 25 angeschlossen ist.

Dieser Zwischenspeicher 20 besteht aus mehreren Speicherstufen S1, S2, S3 mit unterschiedlichen Wärmespeichern 22, 23, 24, die kettenartig hintereinander geschaltet sind.

Die einzelnen Wärmespeicher 22, 23, 24 können unterschiedlich aufgebaut sein und auch unterschiedlich arbeiten. Im vorliegenden Fall handelt es sich bei allen Wärmespeichern 22, 23, 24 um solche Speicher, die dem durchgeleiteten Medium thermische Energie zur Speicherung entziehen oder im Bedarfsfall thermische Energie an das durchgeführte Medium wieder abgeben. Hierbei kann es sich beispielsweise um Wärmespeicher handeln, welche ohne eine Phasenänderung des energiespeichernden Mediums arbeiten, z. B. Festkörperspeicher wie Hochtemperaturbetonspeicher, oder auch um PCM-Speicher mit Speichermedien, die bei der Energiespeicherung einen Phasenwandel durchführen. Beispiel hierfür ist ein Speicher mit geschmolzenem Salz als Speichermedium, welches zur Energiespeicherung einen Phasenwechsel in einen gasförmigen Zustand vollzieht. Bei dem in der Figur dargestellten Ausführungsbeispiel sind beispielsweise die Wärmespeicher 22, 23 der ersten beiden Speicherstufen S1, S2 als nicht phasenveränderte Speicher und der Wärmespeicher 24 in der Speicherstufe S3 als PCM-Speicher aufgebaut. Prinzipiell sind aber auch andere Anordnungen möglich.

An der von der Hochtemperatur-Anschlussstelle HA1 entfernten Seite des Zwischenspeichers 20, an der letzten Speicherstufe S3, ist der Zwischenspeicher 20 an zwei Niedertemperatur-Anschlussstellen NA1, NA2 mit der Speisewasserleitung 10 verbunden. Die Verbindung zur ersten Niedertemperatur-Speicheranschlussstelle NA1 erfolgt über ein erstes Ventil 31, eine Pumpe 26 und ein zweites Ventil 27. Eine parallele Verbindung zu einer zweiten Niedertemperatur-Speicheranschlussstelle NA2 erfolgt nur über ein drittes Ventil 28, d. h. ohne Zwischenschaltung einer Pumpe.

Außerdem ist der Zwischenspeicher 20 an der Niedertemperaturseite an einer Abzweigstelle 30 über ein viertes Ventil 32 mit einer Leitung 80 verbunden, die zu einer Niederdruck-Speicheranschlussstelle NA3 am Kondensator 65 des Kraftwerks führt. Vor den Kondensator 65 ist hier ein Entspannungsbehälter 81 geschaltet, in dem das aus der Leitung 80 vom Zwischenspeicher kommende Medium atmosphärisch entspannt wird. Bei Anlagen, bei denen es egal ist, mit welchen Druck- und Temperaturwerten das Medium dem Kondensator 65 zugeführt wird, kann auf diesen Entspannungsbehälter 81 auch verzichtet werden. Über ein weiteres Ventil 88 ist die Leitung 80 zum Entspannungsbehälter 81 bzw. zum Kondensator 65 hin absperrbar.

An verschiedenen Niederdruck-Speicheranschlussstellen NA4, NA5, NA6, NA7, NA8, NA9 ist die Leitung 80 über separat ansteuerbare Ventile 82, 83, 84, 85, 86, 87 an unterschiedliche Dampfleitungen innerhalb des Kraftwerkblocks angeschlossen. Als Beispiel ist hier dargestellt, dass sich ein Teil der Niedertemperatur-Speicheranschlussstellen NA4, NA5, NA6 jeweils in den verschiedenen Ausgangs-Dampfleitungen 42, 43, 44 der Hochdruckturbine 40 und ein weiterer Teil der Niedertemperatur-Speicheranschlussstellen NA7, NA8, NA9 den verschiedenen Ausgangs-Dampfleitungen 58, 59, 60 der Niederdruckturbine 50 befindet, die zu den Wärmetauschern 47, 70 für das Speisewasser 10 führen.

Alle Ventile 27, 28, 31, 32, 82, 83, 84, 85, 86, 87, 88 der Niedertemperaturseite des Zwischenspeichers 20 werden ebenso wie das Ventil 25 auf der Hochtemperaturseite des Zwischenspeichers 20 von einer Speicher-Steuereinrichtung 21 angesteuert. Diese erhält als weiteres Eingangssignal außerdem eine Temperatur SNT des Dampfes, die an einer Temperatur-Messstelle 36 an der Niedertemperaturseite des Zwischenspeichers 20 gemessen wird. Diese Speicher-Steuereinrichtung 21 steht wiederum mit der Steuereinrichtung 19 über eine Kommunikationsverbindung 17 in Kontakt, so dass diese beiden Steuereinrichtungen 19, 21 koordiniert arbeiten. Alternativ kann die Speicher-Steuereinrichtung 21 auch als Teilkomponente der Steuereinrichtung 19 ausgebildet sein.

Die Funktionsweise des Zwischenspeichers 20 während eines Betriebs des in der Figur dargestellten solarthermischen Kraftwerks 1 ist beispielsweise wie folgt:
In einem Speicherbetriebsmodus soll überhitzter Dampf, welcher nicht für die Dampfturbine benötigt wird, aus dem Dampfleitungssystem 13 dem Zwischenspeicher 20 zugeführt werden, um hierin möglichst viel Wärmeenergie zu speichern. Hierzu wird an der Niedertemperatur-Speicheranschlussstelle NA1 das erste Ventil 27 geöffnet und die Pumpe 26 in Betrieb genommen. Gleichzeitig wird das Ventil 25 an der Hochtemperatur-Speicheranschlussstelle HA1 geregelt geöffnet, wobei eine Regelung der Öffnungsstellung des Ventils 25 vorzugsweise massenstromgeregelt erfolgt. Eine dazu benötigte Massenstrommesseinrichtung ist entsprechend vorgesehen (nicht in der Figur dargestellt). Zusätzlich ist aber auch ein druckgeregeltes Öffnen des Ventils 25 denkbar, so dass der Druck innerhalb des Dampfleitungssystems 13 möglichst konstant bleibt. Hierzu wird an einer Druck-Messstelle 33 der Druck p gemessen und der Speicher-Steuereinrichtung 21 zugeführt, so dass entsprechend das Ventil 25 geregelt werden kann. Gegebenenfalls erfolgt dies koordiniert mit einer bereits wirksamen Druckregelung über das Dampfturbinenventil.

Es strömt dann überhitzter Dampf über das Ventil 25 zunächst in die erste Speicherstufe S1 und gibt dort Wärme an das Medium des Wärmespeichers 22 ab. Dabei kühlt sich der Dampf ab und gelangt schließlich in die zweite Speicherstufe S2. Im Wärmespeicher 23 dieser zweiten Speicherstufe S2 gibt der Dampf weiterhin Wärme ab. Der abgekühlte Dampf gelangt dann in die dritte Speicherstufe S3. Hier verflüssigt sich zunächst, d. h. zum Beginn des Speicherbetriebsmodus, der Dampf unter Abgabe von erheblicher Wärme in das Speichermedium des Wärmespeichers 24, welcher - wie zuvor erläutert - beispielsweise als PCM-Wärmespeicher mit einem phasenverändernden Medium aufgebaut ist, welches sich bei der Aufnahme der thermischen Energie von einem flüssigen in einen gasförmigen Zustand umwandelt. Das im Zwischenspeicher 20 dabei entstehende Wasser wird über die Pumpe 26 und das Ventil 27 der Speisewasserleitung 10 zugeführt.

Mit fortschreitender Dauer des Speicherbetriebsmodus ist der Zwischenspeicher 20 bereits erheblich mit thermischer Energie beladen und die niedertemperaturseitig letzte Speicherstufe S3 ist nicht mehr in der Lage, dem zugeführten Dampf so viel Wärme zu entziehen, dass er vollständig kondensiert. Es steht dann ein Wasser/Dampf-Gemisch an.

Auf Basis der Temperatur SNT am niedertemperaturseitigen Ende des Zwischenspeichers 20 kann dieser Zustand von der Speicher-Steuereinrichtung 21 erkannt werden. Es werden dann die Ventile 27, 31 zur ersten Niedertemperatur-Speicheranschlussstelle NA1 geschlossen und die Pumpe 26 gestoppt und stattdessen werden das Ventil 32 zur Leitung 80 und das Ventil 88 vor dem Entspannungsbehälter 81 geöffnet. Im Entspannungsbehälter 81 wird das Wasser/Dampf-Gemisch thermisch entspannt und an den Kondensator 65 an der dritten Niedertemperatur-Speicheranschlussstelle NA3 weitergeleitet. Es wird noch einmal darauf hingewiesen, dass der Entspannungsbehälter 81 vor dem Kondensator 65 optional ist und das Wasser/Dampf-Gemisch bei entsprechender Auslegung des Kondensators 65 auch direkt dem Kondensator 65 zugeführt werden kann.

Mit späterem Verlauf des Speicherbetriebsmodus ist der Zwischenspeicher 20 schließlich soweit thermisch aufgeladen, dass der zugeführte Dampf nicht mehr kondensiert und am niedertemperaturseitigen Ende des Zwischenspeichers 20 nahezu reiner Dampf ansteht. Anhand der Temperatur SNT am niedertemperaturseitigen Ende des Zwischenspeichers 20 und gegebenenfalls einer zusätzliche Druckmessung (nicht dargestellt) kann von der Speicher-Steuereinrichtung 21 geprüft werden, ob die Temperatur und der Druck des Dampfs an der Niedertemperaturseite des Zwischenspeichers 20 in etwa der Temperatur und dem Druck in einer der Dampfleitungen 42, 43, 44, 58, 59, 60 der weiteren Niedertemperatur-Anschlussstellen NA4, NA5, NA6, NA7, NA8, NA9 entspricht. Wenn ja, wird das Ventil 88 vor dem Entspannungsbehälter 81 bzw. dem Kondensators 65 wieder geschlossen und das entsprechende Ventil 82, 83, 84, 85, 86, 87 an der Niedertemperaturseite geöffnet. Sind die Druck- und/oder Temperaturverhältnisse für keine der Leitungen 42, 43, 44, 58, 59, 60 geeignet, so bleibt einfach das Ventil 88 vor dem Entspannungsbehälter 81 bzw. dem Kondensator 65 geöffnet oder wird geöffnet, wenn es zuvor verschlossen war.

Bei diesem Aufbau kann der Zwischenspeicher 20 insgesamt auf ein höheres Temperaturniveau gebracht werden als bei einer Konstruktion, bei der nur ein Speicherbetrieb möglich ist, solange die Aufnahmekapazität der letzen Speicherstufe S3 ausreicht, um den Dampf vollständig in die flüssige Phase umzuwandeln. Der Speicherbetriebsmodus kann dabei so lange durchgeführt werden, bis der Wärmespeicher 20 voll geladen ist, d. h. keine Wärmeenergie mehr aufnehmen kann. Zum Ausgleich von Wärmeverlusten in den Wärmespeichern kann dann phasenweise kurzzeitig wieder der Speicherbetriebsmodus eingeschaltet werden.

Vorzugsweise ist eine maximale Dampftemperatur definiert, mit der die Temperatur SNT am niedertemperaturseitigen Ende des Zwischenspeichers 20 verglichen wird. Ist diese maximale Dampftemperatur erreicht, wird eine weitere Durchströmung des Zwischenspeichers 20 unterbunden (z. B. indem das Ventil 25 geschlossen wird) und der Zwischenspeicher 20 gilt als vollgeladen. Wesentliche Kriterien zur Festlegung der maximalen Dampftemperatur können beispielsweise prozesstechnische Anforderungen, wie z. B. sicherer, optimal effizienter und wirtschaftlicher Betrieb des Zwischenspeichers 20 im Zusammenhang mit den regenerativen Speisewasservorwärmern bzw. dem Kondensatsystem, sowie auch Sicherheitsanforderungen des eingesetzten Materials der Verbindungsleitungen und Armaturen sein.

In einem Entnahmebetriebsmodus wird dieser Prozess umgekehrt durchlaufen. Ein solcher Entnahmebetriebsmodus wird beispielsweise dann eingeschaltet, wenn die Solarfelder mit den Sonnenkollektor-Dampferzeugereinheiten 2 und Sonnenkollektor-Dampfüberhitzereinheit 4 nicht in der Lage sind, eine Dampfüberhitzer-Endtemperatur TD zu erreichen, die oberhalb der benötigten Frischdampftemperatur für die Turbine 40 liegt. In diesem Fall wird das zweite Ventil 28 an der zweiten Niedertemperatur-Speicheranschlussstelle NA2 geöffnet und es wird wiederum das Ventil 25 an der Hochtemperatur-Speicheranschlussstelle HA1 geregelt geöffnet, wobei dies jetzt jedoch nicht druckgeführt erfolgt, sondern temperaturgeführt in der Art, dass die Temperatur an der Hochtemperatur-Speicheranschlussstelle HA1 auf einen konstanten Wert oberhalb der eigentlich benötigten Frischdampftemperatur gehalten wird. Die exakte Einstellung der Frischdampftemperatur erfolgt dann wie üblich über den Endeinspritzer 15.

In diesem Entnahmebetriebsmodus wird also Wasser aus der Speisewasserleitung 10 entzogen. Bei einer üblichen Druckdifferenz zwischen der Speisewasserleitung 10 (z. B. 50 - 145 bar) und dem Dampfleitungssystem 13 (z.B. 41 - 110 bar) wird erwartungsgemäß keine Pumpe benötigt, damit im Entnahmebetriebsmodus Wasser in den Zwischenspeicher 20 strömt und Dampf entnommen werden kann. In der dritten Speicherstufe S3 wird dieses Wasser unter Entzug der Wärme aus dem PCM-Wärmespeicher 24 bis auf Siedetemperatur vorgewärmt, verdampft und der zweiten Speicherstufe S2 zugeführt, wo ebenfalls unter Entzug der Wärme aus dem Wärmespeicher 23 das Wasser zunächst vorüberhitzt wird und dann der Speicherstufe S1 zugeführt wird. In dieser erfolgt unter Entzug der Wärme aus dem Wärmespeicher 22 die Endüberhitzung des Wasserdampfs, so dass eine Dampfüberhitzer-Endtemperatur TD erreicht wird, die ausreichend hoch ist.

Der Arbeitsablauf des Zwischenspeichers 20 erfolgt also funktionell in der gleichen Reihenfolge wie in der parallel geschalteten Sonnenkollektor-Dampferzeugereinheit 2 mit der nachgeschalteten Sonnenkollektor-Dampfüberhitzereinheit 4, wie dies einfach aus Figur 1 zu ersehen ist.

Selbstverständlich kann das gesamte solarthermische Kraftwerk 1 nicht nur neben den dargestellten Sonnenkollektorsträngen bzw. Solarfeldern weitere Solarfelder aufweisen, die jeweils parallel geschaltet sind und überhitzten Dampf dem Dampfleitungssystem 13 vor der Turbine 40 zuführen, sondern ebenso mehrere parallele Speicher 20, die auch separat je nach Bedarf in den verschiedenen Betriebsmodi betrieben werden können.

In der Figur ist außerdem noch ein optionaler Bypass 14 von dem hochtemperaturseitigen Ende des Zwischenspeichers 20 zu einer Hochtemperatur-Anschlussstelle HA2 hinter dem Endeinspritzer 15 eingezeichnet. Dieser Bypass 14 wird über ein separates Ventil 29 geöffnet. Hinter diesem Ventil 29 befindet sich ein separater Bypass-Einspritzkühler 16 zur Reduzierung der Temperatur des aus dem Zwischenspeicher 20 kommenden Dampfes. Der zusätzliche Bypass-Einspritzkühler 16 wird ebenfalls von der Steuereinrichtung 19 angesteuert und das Ventil 29 von der Speicher-Steuereinrichtung 21. Dieser Bypass 14 kann genutzt werden, um im Entnahmebetriebsmodus den überhitzten Dampf nicht vor der Endeinspritzung 15 über das Ventil 25 in das Dampfleitungssystem 13 zuzugeben, sondern stattdessen über das Ventil 29 und den zusätzlichen Bypass-Einspritzkühler 16 bereits exakt auf die gewünschte Frischdampftemperatur eingestellten Dampf an die Turbine 40 zu liefern.

Es wird abschließend noch einmal darauf hingewiesen, dass es sich bei den vorhergehend detailliert beschriebenen Verfahren und dem solarthermischen Kraftwerken lediglich um bevorzugte Ausführungsbeispiele handelt, welche vom Fachmann in verschiedenster Weise modifiziert werden können, ohne den Bereich der Erfindung zu verlassen, soweit er durch die Ansprüche vorgegeben ist. Insbesondere können noch weitere Niedertemperatur-Speicheranschlussstellen zu verschiedenen anderen Dampfleitungen vorgesehen sein. Diese können unter geeigneten Voraussetzungen (Druck- und Temperatur) auch bereits mit Wasser-Dampfgemisch bespeist werden. Ebenso kann auch bei einer Einspeisung in eine oder mehrere Dampfleitungen z.B. überschüssiges Strömungsmedium, welches nicht mehr von den Dampfleitungen aufgenommen werden kann oder soll, parallel in die Entspannungseinrichtung und/ oder den Kondensator abgeführt werden. Weiterhin ist auch ein Anschluss des Zwischenspeichers 20 auf der Niedertemperaturseite direkt an den Speisewasserbehälter 63 möglich. Insbesondere kann auch der Zwischenspeicher 20 mit einer beliebigen weiteren Anzahl von Speicherstufen aufgebaut sein oder prinzipiell auch nur aus einer einzelnen Speicherstufe bestehen. Weiterhin sind anstelle der genannten Parabolrinnenkollektoren oder Fresnel-Kollektoren auch beliebige andere direkt oder indirekt arbeitende Sonnenkollektoren einsetzbar. Insbesondere ist eine Nutzung im Zusammenhang mit der neueren Solar-Turm Technologie mit Direktverdampfung möglich. Auch sind die oben genannten Temperatur- und Druckbereiche lediglich beispielhaft und nicht beschränkend anzusehen. Es ist maßgeblich von den zur Verfügung stehenden Speichertypen und -materialien abhängig, bis zu welchen Temperaturen und Drücken die Erfindung einsetzbar ist.

Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriffe "Einheit" nicht aus, dass diese aus mehreren Komponenten besteht, die gegebenenfalls auch räumlich verteilt sein können.

## Patentansprüche

1. Solarthermisches Kraftwerk (1) mit zumindest folgenden Komponenten:
- eine Sonnenkollektor-Dampferzeugereinheit (2) zur Erzeugung von Dampf,
- eine der Sonnenkollektor-Dampferzeugereinheit (2) nachgeschaltete Sonnenkollektor-Dampfüberhitzereinheit (4) zur Überhitzung des Dampfes,
- eine über ein Dampfleitungssystem (13) mit einem Ausgang der Sonnenkollektor-Dampfüberhitzereinheit (4) verbundene Dampfturbine (40), welche im Betrieb mit dem überhitzten Dampf gespeist wird,
**dadurch gekennzeichnet, dass**
- ein Zwischenspeicher (20), welcher zumindest an einer zwischen der Sonnenkollektor-Dampfüberhitzereinheit (4) und der Dampfturbine (40) angeordneten ersten Hochtemperatur-Speicheranschlussstelle (HA1) mit dem Dampfleitungssystem (13) verbunden ist,
- im Dampfleitungssystem (13) zwischen der Hochtemperatur-Speicheranschlussstelle (HA1) und der Dampfturbine (40) eine Dampfkühleinrichtung (15) angeordnet ist,
- und eine Steuereinrichtung (19, 21) vorhanden ist, welche so ausgebildet ist, dass sie im Betrieb die Temperatur (TE) des überhitzten Dampfes auf eine Turbinen-Frischdampftemperatur regelt, indem der Dampf zunächst in der Sonnenkollektor-Dampfüberhitzereinheit (4) auf eine oberhalb der Turbinen-Frischdampftemperatur liegende Dampfüberhitzer-Endtemperatur (TD) überhitzt wird und dann mittels der Dampfkühleinrichtung (15) auf die Turbinen-Frischdampftemperatur abgekühlt wird,
und dass
in einem Speicherbetriebsmodus ein Teil des überhitzten Dampfes an der ersten Hochtemperatur-Speicheranschlussstelle (HA1) in den Zwischenspeicher (20) geleitet wird und
in einem Entnahmebetriebsmodus überhitzter Dampf aus dem Zwischenspeicher (20) dem Dampfleitungssystem (13) an der ersten Hochtemperatur-Speicheranschlussstelle (HA1) zugeführt wird.

2. Solarthermisches Kraftwerk nach Anspruch 1, wobei zwischen der ersten Hochtemperatur-Speicheranschlussstelle (HA1) und der Dampfturbine (40) eine zweite Hochtemperatur-Speicheranschlussstelle (HA2) angeordnet ist.

3. Solarthermisches Kraftwerk nach Anspruch 1 oder 2, **dadurch gekennzeichnet, dass** der Zwischenspeicher (20) einen Wärmespeicher (22, 23, 24) umfasst, in dem dem im Speicherbetriebsmodus eingeleiteten Dampf thermische Energie entzogen und gespeichert wird und in dem in einem Entnahmebetriebsmodus die gespeicherter thermische Energie wieder an den Dampf abgegeben wird, bevor er dem Dampfleitungssystem (13) zugeführt wird.

4. Solarthermisches Kraftwerk nach einem der Ansprüche 1 bis 3, **dadurch gekennzeichnet, dass** der Zwischenspeicher (20) zumindest einen Wärmespeicher (24) umfasst, in dem die thermische Energie durch einen Phasenübergang eines Speichermediums gespeichert oder wieder abgegeben wird.

5. Solarthermisches Kraftwerk nach Anspruch 3 oder 4, **dadurch gekennzeichnet, dass** der Zwischenspeicher (20) zumindest einen Wärmespeicher (22, 23) umfasst, in dem die thermische Energie von einem Speichermedium ohne Phasenübergang gespeichert oder wieder abgegeben wird.

6. Solarthermisches Kraftwerk nach einem der Ansprüche 3 bis 5,
**dadurch gekennzeichnet, dass** der Zwischenspeicher (20) mehrere Speicherstufen (S1, S2, S3) zur Aufnahme und Abgabe von thermischer Energie umfasst.

7. Solarthermisches Kraftwerk nach Anspruch 6,
**dadurch gekennzeichnet, dass** zumindest zwei der Speicherstufen (S1, S2, S3) unterschiedlich aufgebaut sind.

8. Solarthermisches Kraftwerk nach Anspruch 6 oder 7, **dadurch gekennzeichnet, dass** in einer der Speicherstufen (S3) zumindest zeitweise der Dampf im Speicherbetriebsmodus zumindest teilweise verflüssigt wird und im Entnahmebetriebsmodus Wasser verdampft wird.

9. Solarthermisches Kraftwerk nach einem der Ansprüche 6 bis 8,
**dadurch gekennzeichnet, dass** die Speicherstufen (S1, S2, S3) funktionell parallel zur Sonnenkollektor-Dampferzeugereinheit (2) mit der nachgeschalteten Sonnenkollektor-Dampfüberhitzereinheit (4) aufgebaut sind.

10. Solarthermisches Kraftwerk nach einem der Ansprüche 1 bis 9,
**dadurch gekennzeichnet, dass** der Zwischenspeicher (20) an zumindest einer Niedertemperatur-Speicheranschlussstelle (NA1, NA2) mit einer Speisewasserleitung (10) verbunden ist, über die Speisewasser an die Sonnenkollektor-Dampferzeugereinheit (5) geleitet wird.

11. Solarthermisches Kraftwerk nach Anspruch 10,
**dadurch gekennzeichnet, dass** der Zwischenspeicher (20) an der Niedertemperatur-Speicheranschlussstelle (NA1) über eine Pumpe (26) mit der Speisewasserleitung (10) verbunden ist.

12. Solarthermisches Kraftwerk nach einem der Ansprüche 1 bis 11,
**dadurch gekennzeichnet, dass** der Zwischenspeicher (20) an einer weiteren Niedertemperatur-Speicheranschlussstelle (NA3) mit einem Kondensator (65) und/oder einer Entspannungseinrichtung (89) verbunden ist.

13. Solarthermisches Kraftwerk nach einem der Ansprüche 1 bis 12,
**dadurch gekennzeichnet, dass** der Zwischenspeicher (20) an verschiedenen weiteren Niedertemperatur-Speicheranschlussstellen (NA4, NA5, NA6, NA6, NA8, NA9) mit verschiedenen Dampfleitungen (42, 43, 44, 58, 59, 60) verbunden ist, in denen im Betrieb Dampf bei unterschiedlichen Temperaturen und/oder Drücken geführt wird.

14. Verfahren zum Betrieb eines solarthermischen Kraftwerks nach einem der Ansprüche 1-13
**dadurch gekennzeichnet, dass**
die Temperatur (TE) des überhitzten Dampfes auf eine vorgegebene Turbinen-Frischdampftemperatur geregelt wird, indem der Dampf zunächst auf eine oberhalb der Turbinen-Frischdampftemperatur liegende Dampfüberhitzer-Endtemperatur (TD) überhitzt wird und dann in der hinter der Sonnenkollektor-Dampfüberhitzereinheit (4) angeordneten Dampfkühleinrichtung (15) auf die Turbinen-Frischdampftemperatur abgekühlt wird,
und wobei
in einem Speicherbetriebsmodus ein Teil des überhitzten Dampfes vor der Dampfkühleinrichtung (15) in den Zwischenspeicher (20) geleitet wird und
in einem Entnahmebetriebsmodus überhitzter Dampf vor und/oder hinter der Dampfkühleinrichtung (15) aus dem Zwischenspeicher (20) entnommen wird.

15. Verfahren nach Anspruch 14,
**dadurch gekennzeichnet, dass** im Speicherbetriebsmodus der Zwischenspeicher (20) durch Öffnung eines Ventils (25) mit einem Dampfleitungssystem (13) zwischen der Sonnenkollektor-Dampfüberhitzereinheit (4) und der Dampfturbine (40) verbunden wird, wobei die Öffnung des Ventils (25) in Abhängigkeit eines vorgegebenen Massenstrom-Sollwerts in dem Dampfleitungssystem (13) vor der Dampfturbine (40) geregelt wird.

16. Verfahren nach Anspruch 14 oder 15,
**dadurch gekennzeichnet, dass** im Entnahmebetriebsmodus der Zwischenspeicher (20) durch Öffnung eines Ventils (25) mit einem Dampfleitungssystem (13) zwischen der Sonnenkollektor-Dampfüberhitzereinheit (4) und der Dampfturbine (40) verbunden wird, wobei die Öffnung des Ventils auf eine konstante Temperatur an einer Hochtemperatur-Speicheranschlussstelle (HA1) im Dampfleitungssystem (13) geregelt wird.

## Claims

1. Solar thermal power plant (1) having at least the following components:
- a sun collector steam generator unit (2) for generating steam,
- a sun collector steam superheater unit (4), connected downstream of the sun collector steam generator unit (2), for superheating the steam,
- a steam turbine (40) which is connected via a steam line system (13) to an outlet of the sun collector steam superheater unit (4) and which, in operation, is supplied with the superheated steam,
**characterized in that**
- an intermediate storage unit (20) which is connected with the steam line system (13), at least at a first high-temperature storage unit connection point (HA1) arranged between the sun collector steam superheater unit (4) and the steam turbine (40),
- in the steam line system (13), there is arranged a steam cooling device (15) between the high-temperature storage unit connection point (HA1) and the steam turbine (40),
- and a control device (19, 21) is present and is designed such that, in operation, it adjusts the temperature (TE) of the superheated steam to a turbine fresh steam temperature, **in that** the steam is first superheated in the sun collector steam superheater unit (4) to a steam superheater end temperature (TD) above the turbine fresh steam temperature, and is then cooled by means of the steam cooling device (15) to the turbine fresh steam temperature,
and **in that**,
in a storage operating mode, part of the superheated steam is guided, at the first high-temperature storage unit connection point (HA1), into the intermediate storage unit (20) and,
in a withdrawal operating mode, superheated steam from the intermediate storage unit (20) is fed to the steam line system (13) at the first high-temperature storage unit connection point (HA1).

2. Solar thermal power plant according to Claim 1, wherein a second high-temperature storage unit connection point (HA2) is arranged between the first high-temperature storage unit connection point (HA1) and the steam turbine (40).

3. Solar thermal power plant according to Claim 1 or 2, **characterized in that** the intermediate storage unit (20) comprises a heat storage unit (22, 23, 24) in which thermal energy is extracted from the steam introduced in the storage operating mode and is stored, and in which, in a withdrawal operating mode, the stored thermal energy is given off back to the steam before the latter is conveyed to the steam line system (13).

4. Solar thermal power plant according to one of Claims 1 to 3, **characterized in that** the intermediate storage unit (20) comprises at least one heat storage unit (24) in which the thermal energy is stored or given off again by means of a phase transition of a storage medium.

5. Solar thermal power plant according to Claim 3 or 4, **characterized in that** the intermediate storage unit (20) comprises at least one heat storage unit (22, 23) in which the thermal energy is stored or given off again by a storage medium without a phase transition.

6. Solar thermal power plant according to one of Claims 3 to 5,
**characterized in that** the intermediate storage unit (20) comprises multiple storage stages (S1, S2, S3) for taking up and giving off thermal energy.

7. Solar thermal power plant according to Claim 6,
**characterized in that** at least two of the storage stages (S1, S2, S3) are constructed differently.

8. Solar thermal power plant according to Claim 6 or 7,
**characterized in that** in one of the storage stages (S3), at least at times, the steam is at least partially liquefied in the storage operating mode and water is vaporized in the withdrawal operating mode.

9. Solar thermal power plant according to one of Claims 6 to 8,
**characterized in that** the storage stages (S1, S2, S3) are constructed functionally parallel to the sun collector steam generator unit (2) with the downstream-connected sun collector steam superheater unit (4).

10. Solar thermal power plant according to one of Claims 1 to 9,
**characterized in that** the intermediate storage unit (20) is connected, at at least one low-temperature storage unit connection point (NA1, NA2), to a feed water line (10) via which feed water is supplied to the sun collector steam generator unit (2).

11. Solar thermal power plant according to Claim 10,
**characterized in that** the intermediate storage unit (20) is connected, at the low-temperature storage unit connection point (NA1), to the feed water line (10) via a pump (26).

12. Solar thermal power plant according to one of Claims 1 to 11,
**characterized in that** the intermediate storage unit (20) is connected, at a further low-temperature storage unit connection point (NA3), to a condenser (65) and/or an expansion device (89).

13. Solar thermal power plant according to one of Claims 1 to 12,
**characterized in that** the intermediate storage unit (20) is connected, at various further low-temperature storage unit connection points (NA4, NA5, NA6, NA7, NA8, NA9), to various steam lines (42, 43, 44, 58, 59, 60) in which, in operation, steam is conveyed at various temperatures and/or pressures.

14. Method for operating a solar thermal power plant according to one of Claims 1 to 13,
**characterized in that**
the temperature (TE) of the superheated steam is controlled to a predefined turbine fresh steam temperature, **in that** the steam is first superheated to a steam superheater end temperature (TD) above the turbine fresh steam temperature, and is then cooled, in the steam cooling device (15) arranged downstream of the sun collector steam superheater unit (4), to the turbine fresh steam temperature,
and wherein,
in a storage operating mode, part of the superheated steam is guided, upstream of the steam cooling device (15), into the intermediate storage unit (20) and,
in a withdrawal operating mode, superheated steam is withdrawn from the intermediate storage unit (20) upstream and/or downstream of the steam cooling device (15).

15. Method according to Claim 14,
**characterized in that**, in the storage operating mode, the intermediate storage unit (20) is connected to a steam line system (13) between the sun collector steam superheater unit (4) and the steam turbine (40) by opening a valve (25), wherein the opening of the valve (25) is adjusted in dependence on a predefined mass flow setpoint value in the steam line system (13) upstream of the steam turbine (40).

16. Method according to Claim 14 or 15,
**characterized in that**, in the withdrawal operating mode, the intermediate storage unit (20) is connected to a steam line system (13) between the sun collector steam superheater unit (4) and the steam turbine (40) by opening a valve (25), wherein the opening of the valve is adjusted for a constant temperature at a high-temperature storage unit connection point (HA1) in the steam line system (13).

## Revendications

1. Centrale héliothermique (1) comprenant au moins les composants suivants :
- une unité de génération de vapeur à collecteurs solaires (2) en vue de générer de la vapeur,
- une unité de surchauffe de vapeur à collecteurs solaires (4) montée en aval de l'unité de génération de vapeur à collecteurs solaires (2) en vue de surchauffer la vapeur,
- une turbine à vapeur (40) raccordée à une sortie de l'unité de surchauffe de vapeur à collecteurs solaires (4) via un système de conduites de vapeur (13), turbine qui est alimentée en fonctionnement avec la vapeur surchauffée,
**caractérisée en ce que**
- un accumulateur intermédiaire (20), lequel est raccordé au système de conduites de vapeur (13) au moins au niveau d'un premier point de raccordement à l'accumulateur haute température (HA1) disposé entre l'unité de surchauffe de vapeur à collecteurs solaires (4) et la turbine à vapeur (40),
- dans le système de conduites de vapeur (13) entre le point de raccordement à l'accumulateur haute température (HA1) et la turbine à vapeur (40) est disposé un dispositif de refroidissement de vapeur (15),
- et un dispositif de commande (19, 21) est présent, lequel est configuré de sorte qu'il règle en fonctionnement la température (TE) de la vapeur surchauffée sur une température de vapeur vive de turbine, la vapeur étant tout d'abord surchauffée dans l'unité de surchauffe de vapeur à collecteurs solaires (4) pour atteindre une température finale de surchauffe de vapeur (TD) supérieure à la température de vapeur vive de turbine et étant ensuite refroidie pour atteindre la température de vapeur vive de turbine au moyen du dispositif de refroidissement de vapeur (15),
et **en ce que**
dans un mode de fonctionnement d'accumulation une partie de la vapeur surchauffée au niveau du point de raccordement à l'accumulateur haute température (HA1) est conduite dans l'accumulateur intermédiaire (20) et
dans un mode de fonctionnement de soutirage, la vapeur surchauffée provenant de l'accumulateur intermédiaire (20) est acheminée vers le système de conduites de vapeur (13) au niveau du premier point de raccordement à l'accumulateur haute température (HA1).

2. Centrale héliothermique selon la revendication 1, dans laquelle entre le premier point de raccordement à l'accumulateur haute température (HA1) et la turbine à vapeur (40) un deuxième point de raccordement à l'accumulateur haute température (HA2) est disposé.

3. Centrale héliothermique selon la revendication 1 ou 2, **caractérisée en ce que** l'accumulateur intermédiaire (20) comprend un accumulateur de chaleur (22, 23, 24), dans lequel de l'énergie thermique est prélevée ou accumulée dans la vapeur introduite dans le mode de fonctionnement d'accumulation et dans lequel l'énergie thermique accumulée dans un mode de fonctionnement de prélèvement est restituée à la vapeur, avant d'être acheminée vers le système de conduites de vapeur (13).

4. Centrale héliothermique selon l'une des revendications 1 à 3,
**caractérisée en ce que** l'accumulateur intermédiaire (20) comprend au moins un accumulateur de chaleur (24), dans lequel l'énergie thermique est accumulée ou restituée par le biais d'une transition de phases d'un milieu d'accumulation.

5. Centrale héliothermique selon la revendication 3 ou 4,
**caractérisée en ce que** l'accumulateur intermédiaire (20) comprend au moins un accumulateur de chaleur (22, 23), dans lequel l'énergie thermique est accumulée ou restituée par un milieu d'accumulation sans transition de phases.

6. Centrale héliothermique selon l'une des revendications 3 à 5,
**caractérisée en ce que** l'accumulateur intermédiaire (20) comprend plusieurs étapes d'accumulation (S1, S2, S3) en vue de l'absorption et de la restitution de l'énergie thermique.

7. Centrale héliothermique selon la revendication 6,
**caractérisée en ce qu'**au moins deux des étapes d'accumulation (S1, S2, S3) sont différentes.

8. Centrale héliothermique selon la revendication 6 ou 7,
**caractérisée en ce que** dans l'une des étapes d'accumulation (S3) au moins par intermittence la vapeur dans le mode de fonctionnement d'accumulation est au moins partiellement fluidifiée et l'eau évaporée dans le mode de fonctionnement de prélèvement.

9. Centrale héliothermique selon l'une des revendications 6 à 8,
**caractérisée en ce que** les étapes d'accumulation (S1, S2, S3) sont fonctionnellement parallèles à l'unité de génération de vapeur à collecteurs solaires (2) avec l'unité de surchauffe de vapeur à collecteurs solaires (4) montée en aval.

10. Centrale héliothermique selon l'une des revendications 1 à 9,
**caractérisée en ce que** l'accumulateur intermédiaire (20) est raccordé au niveau d'au moins un point de raccordement d'accumulateur basse température (NA1, NA2) à une conduite d'eau d'alimentation (10), via laquelle l'eau d'alimentation est conduite à l'unité de génération de vapeur à collecteurs solaires (5).

11. Centrale héliothermique selon la revendication 10,
**caractérisée en ce que** l'accumulateur intermédiaire (20) est raccordée à la conduite d'eau d'alimentation (10) au niveau du point de raccordement à l'accumulateur basse température (NA1) via une pompe (26).

12. Centrale héliothermique selon l'une des revendications 1 à 11,
**caractérisée en ce que** l'accumulateur intermédiaire (20) est raccordé à un condensateur (65) et/ou un dispositif de détente (89) au niveau d'un autre point de raccordement de l'accumulateur basse température (NA3).

13. Centrale héliothermique selon l'une des revendications 1 à 12,
**caractérisée en ce que** l'accumulateur intermédiaire (20) est raccordé à différentes conduites de vapeur (42, 43, 44, 58, 59, 60) au niveau d'autres points de raccordement à l'accumulateur basse température (NA4, NA5, NA6, NA6, NA8, NA9), dans lesquels en fonctionnement la vapeur est guidée à des températures et/ou des pressions différentes.

14. Procédé de fonctionnement d'une centrale héliothermique selon l'une des revendications 1 à 13,
**caractérisé en ce que**
la température (TE) de la vapeur surchauffée est réglée sur une température de vapeur vive de turbine prédéfinie, la vapeur étant tout d'abord surchauffée pour atteindre une température finale de surchauffe de vapeur (TD) supérieure à la température de vapeur vive de turbine et ensuite refroidie dans le dispositif de refroidissement de vapeur (15) disposé derrière l'unité de surchauffe de vapeur à collecteurs solaires (4) pour atteindre la température de vapeur vive de turbine,
et dans lequel
dans un mode de fonctionnement d'accumulation une partie de la vapeur surchauffée est conduite devant le dispositif de refroidissement de vapeur (15) dans l'accumulateur intermédiaire (20) et
dans un mode de fonctionnement de prélèvement la vapeur surchauffée est prélevée dans l'accumulateur intermédiaire (20) devant et/ou derrière le dispositif de refroidissement de vapeur (15).

15. Procédé selon la revendication 14,
**caractérisé en ce que** dans le mode de fonctionnement d'accumulation l'accumulateur intermédiaire (20) est raccordé par le biais de l'ouverture d'une soupape (25) à un système de conduites de vapeur (13) entre l'unité de surchauffe de vapeur à collecteurs solaires (4) et la turbine à vapeur (40), dans lequel l'ouverture de la soupape (25) est réglée en fonction d'une valeur de consigne de flux massique prédéfinie dans le système de conduites de vapeur (13) en amont de la turbine à vapeur (40) .

16. Procédé selon la revendication 14 ou 15,
**caractérisé en ce que** dans le mode de fonctionnement de prélèvement l'accumulateur intermédiaire (20) est raccordé par le biais de l'ouverture d'une soupape (25) à un système de conduites de vapeur (13) entre l'unité de surchauffe de vapeur à collecteurs solaires (4) et la turbine à vapeur (40), dans lequel l'ouverture de la soupape est réglée sur une température constante au niveau d'un point de raccordement à l'accumulateur haute température (HA1) dans le système de conduites de vapeur (13) .
